**Europäisches Patentamt**

**European Patent Office**

**Office européen des brevets**

(11) Veröffentlichungsnummer: **0 151 658**
**A1**

# (12) EUROPÄISCHE PATENTANMELDUNG

(21) Anmeldenummer: **84101309.7**

(22) Anmeldetag: **09.02.84**

(51) Int. Cl.⁴: **B 27 L 5/08**
**B 26 D 7/06**

(43) Veröffentlichungstag der Anmeldung:
**21.08.85 Patentblatt 85/34**

(84) Benannte Vertragsstaaten:
**CH DE FR IT LI**

(71) Anmelder: **Carl Rückle Maschinenbau GmbH**

**D-7302 Ostfildern-Kemnat(DE)**

(72) Erfinder: **Weislogel, Horst D.**
**Gutastrasse 14**
**D-7022 Leinfelden-Echterdingen 2(DE)**

(72) Erfinder: **Oelte, Burkhard, Dipl.-Ing. (FH)**
**Am Kühnbach 48**
**D-7170 Schwäbisch Hall-Bibersfeld(DE)**

(74) Vertreter: **Schmid, Berthold et al,**
**Patentanwälte Dipl.-Ing. B. Schmid Dr. Ing. G. Birn**
**Dipl.-Phys. H. Quarder Falbenhennenstrasse 17**
**D-7000 Stuttgart 1(DE)**

(54) **Maschine zum Beschneiden eines Furnierpakets und mit dieser Maschine durchgeführtes Verfahren.**

(57) Zumindest die beiden Längs-Schnittlinien, vorzugsweise zusätzlich aber auch noch zwei Quer-Schnittlinien, entlang denen ein Furnierpaket (3) abgeschnitten werden soll, werden festgelegt, während sich das Paket auf einer übergabevorrichtung (2) befindet, wobei es gegenüber einem absenkbaren Richtanschlag (4) ausgerichtet ist. Diese Schnittlinien werden vorzugsweise mit Hilfe eines Richtlichts (7) so festgelegt, daß das Paket einerseits mit geringstem Verlust, andererseits aber entlang der gesamten Länge und insbesondere auch Breite abgeschnitten wird, wobei man gegebenenfalls auch einen breiteren Streifen abschneiden kann, um beispielsweise Äste zu entfernen.

Die Positionen, in welchen sich das Furnierpaket beim Festlegen der beiden Längs-Schnittlinien befindet, werden erfaßt und zur Steuerung des Vorschubwegs bis zur Schneidebene (26) herangezogen.

Das Furnierpaket befindet sich während des Schneidens in einer Zustell-Wende-Haltevorrichtung (9). Nach dem Abschneiden der ersten Längskante wird das Paket in der Vorrichtung (9) um 180° gewendet und dabei unverrückbar zusammengedrückt. Gesteuert durch den zuvor ermittelten Wert wird das Paket ein zweites Mal zur Schneidebene (26) vorgeschoben. Anschließend wird das Paket an eine zusätzliche Schneidvorrichtung (42) weitergegeben, wo gegebenenfalls die beiden Paketenden längs der vorher festgelegten Quer-Schnittlinien abgeschnitten werden. Während dieser Vorgänge wird das zweite Paket ausgemessen.

Die fertig geschnittenen Pakete werden unter Berücksichtigung ihrer tatsächlichen Größe mittels einer steuerbaren Abstapelvorrichtung gestapelt.

./...

Fig. 1

Carl Rückle

Maschinenbau GmbH


7302 Ostfildern-Kemnat


Maschine zum Beschneiden eines Furnierpakets und mit dieser

Maschine durchgeführtes Verfahren


Die Erfindung bezieht sich auf eine Maschine zum Beschneiden der
Längskanten eines Furnierpakets, der eine Vorrichtung zum Festlegen bzw. Anbringen wenigstens einer Längs-Schnitt- oder -Markierungs- oder dazu parallelen -Referenzlinie zugeordnet ist. Derartige Maschinen sind in verschiedenen Ausführungen bekannt. Bei
einer solchen Maschine befindet sich die Vorrichtung zum Festlegen der Längs-Schnittlinie im Schneidbereich. Die Schnittlinie
wird dabei mit Hilfe eines sog. Richtlichts festgelegt. Letzteres
scheint auf die Oberfläche des obersten Furnierblatts des Furnierpakets und man kann anhand des "Lichtstrichs" bestimmen, an welcher Stelle die betreffende Längskante des Pakets abgeschnitten werden soll. Die Schnittlinie richtet sich in erster Linie nach dem Verlauf des Längsrandes. Sie muß so festgelegt werden, daß das Paket auf seiner gesamten Länge geschnitten wird, um eine insgesamt saubere Längskante jedes Furnierblatts zu bekommen. Zusätzlich kann man u.U. auch noch berücksichtigen, daß ein möglicherweise im Randbereich vorhandener Ast od. anderer Fehler abgeschnitten wird. Wenn das Richtlicht so plaziert ist, daß die Schneidebene unmittelbar durch den "Lichtstrich" auf dem Furnierpaket verläuft, so kann man den Schneidvorgang auslösen, sobald die Längs-Schnittlinie festgelegt ist. Entsprechendes gilt auch für gegebenenfalls vorzunehmende Schnitte in Querrichtung. Bei diesem Verfahren befindet sich das Furnierpaket auf einem Wagen oder einer anderen Beschickungsvorrichtung, mit dem es so weit unter dem oberen Schneidmesser hindurchgeschoben wird, bis das Richtlicht die richtige Schnittlinie markiert.

Nach dem ersten Abschneiden wird das Paket mit Hilfe des genannten Wagens od. dgl. wieder zurückgefahren, vom Wagen abgenommen, um 180° gewendet und anschließend wieder auf den Wagen aufgesetzt. Hernach schiebt man den Wagen wieder in Richtung Schneidebene, bis auch die zweite Schnittlinie festgelegt ist. Dann erfolgt das Auslösen des zweiten Schneidvorgangs.

Eine andere Maschine arbeitet in ähnlicher Weise, jedoch befindet sich dabei das Referenzlicht nicht im Schneidbereich, sondern zwischen letzterem und der Bedienungsperson. Nach dem Festlegen der ersten Längs-Schnittlinie wird ein Anschlag gesetzt. Nunmehr kann man den Wagen in Richtung Schneidebene weiterverschieben, bis der Anschlag an einem Gegenanschlag auftrifft. Nunmehr befindet sich die zuvor mit Hilfe beispielsweise des Richtlichts festgelegte Schnittlinie genau in der Schneidebene, so daß man ohne weitere Kontrolle abschneiden kann.

Auch bei dieser Maschine wird das Paket anschließend wieder zurückgeholt, gewendet und erneut der Vorrichtung zum Festlegen der zweiten Längs-Schnittlinie zugeführt.

Bei diesem Wenden von Hand besteht die Gefahr, daß sich einzelne Furnierblätter gegenüber ihren Nachbarblättern verschieben, wodurch die Furnierblätter dieses Stapels unterschiedlich breit werden. Es ist auch nicht ganz auszuschließen, daß an einem gegenüber dem Stapel verschobenen Blatt oder eine Blattgruppe kein sauberer Längsrand entsteht. Denkbar ist sogar, daß sich in ungewollter Weise am einen oder anderen Blatt bzw. der einen oder anderen Blattgruppe antiparallele Längs-Schnittlinien ergeben.

Die Aufgabe der Erfindung besteht infolgedessen darin, eine Maschine der eingangs genannten Art so weiterzubilden, daß die Gefahr des Verrutschens einzelner Furnierblätter oder Furnierblattgruppen innerhalb eines Furnierpakets während des Wendens ausgeschaltet oder zumindest erheblich reduziert wird. Darüber hinaus soll dieser Vorgang beschleunigt werden, ohne eine Einbuße an Genauigkeit in Kauf nehmen zu müssen. Auch der Vorgang des Festlegens bzw. Markierens der Schnittlinien soll möglichst erleichtert werden.

Zur Lösung dieser Aufgabe wird erfindungsgemäß vorgeschlagen, daß die Maschine gemäß dem Oberbegriff des Anspruchs 1, entsprechend dem kennzeichnenden Teil dieses Anspruchs, ausgebildet ist. Nach dem ersten Längsschnitt wird das Paket unter ständigem Festhalten in der Wendevorrichtung gewendet und dem Schneidbereich in vorher festgelegter Weise ein zweites Mal zugeführt. Damit ist gewährleistet, daß die einzelnen Blätter des Furnierpakets zwischen den beiden Schneidvorgängen in genau gleicher gegenseitiger Zuordnung bleiben und somit ein einwandfreies Ergebnis erzielt wird. Da sich die Festleg- bzw. Markierungsvorrichtung vor der Wendevorrichtung oder an deren Eintrittsbereich befindet, müssen die beiden Schneidlinien für die nachfolgenden beiden Schneidvorgänge außerhalb der Wendevorrichtung oder beim Eintritt in diese festgelegt bzw. markiert werden.

Vorstehend wurde lediglich das Festlegen beispielsweise mit Hilfe eines Richtlichts beschrieben, weil dies die verbreitetste und auch relativ schnell durchzuführende Art der Festlegung ist. Darüber hinaus besteht aber auch noch die Möglichkeit, die Schnittlinien mit Hilfe einer Markierung, beispielsweise eines linienförmigen Farbenaufdrucks festzulegen, wobei dann die Markierung von einer entsprechenden Detektoreinrichtung gesucht wird, die zugleich auch den Vorschub des Pakets gegen die Schneidebene hin stoppt. Hierbei kann entweder unmittelbar an der Stelle markiert werden, an der später auch abgeschnitten wird. Stattdessen ist aber auch das Arbeiten mit einer Referenzlinie möglich, die gleichfalls mit einer Detektoreinrichtung zusammenarbeitet, wobei dann allerdings der Schnitt nicht an der Stelle der Referenzlinie, sondern seitlich daneben erfolgt, beispielsweise um die Referenzlinie mit abzuschneiden. Referenzlinien dürften allerdings gegenüber den Markierungslinien oder den festgelegten Linien per Richtlicht od. dgl. die geringere Bedeutung zukommen. Aus diesem Grunde werden sie nachfolgend nur noch am Rande erwähnt, was allerdings weder eine Einschränkung hinsichtlich der Maschine noch des Verfahrens beinhalten soll. Andererseits sind aber gewisse Ausgestaltungen sowohl der Maschine als auch des Verfahrens nur für festgelegte, nicht jedoch für markierte Linien geeignet. Derartige Einschränkungen sind aber für den Durchschnittsfachmann aus den nachstehenden Ausführungen ohne weiteres erkennbar.

In Weiterbildung der Erfindung wird vorgeschlagen, daß eine Zustellvorrichtung zum Transport des Furnierpakets in den Schneidbereich von der Festleg- bzw. Markierungsvorrichtung oder durch die mittels letzterer festgestellten Werte steuerbar ist. Die Steuerung kann beispielsweise derart vorgenommen werden, daß man nach dem Festlegen oder Markieren der Schnittlinie die momentane Position des Pakets beispielsweise koordinatenmäßig erfaßt und den Wert automatisch oder von Hand an die Zustellvorrichtung gibt. Diese legt dann den Vorschubweg bis zur Schneidebene fest. Dasselbe gilt dann beim Festlegen der zweiten Längs-Schnittlinie. Dabei muß allerdings der Abstand in der Festleg- bzw. Markierungsvorrichtung von der Schneidebene beim Festlegen bzw. Markieren bekannt sein und das Wenden berücksichtig werden. Zweckmäßigerweise handelt es sich insoweit um einen konstanten Wert. Wenn zusätzlich auch noch Quer-Schnitt-bzw. -Markierungslinien vorgesehen sind, so kann man auch diese Werte erfassen und später für das automatische Abschneiden an den vorgesehenen Stellen ausnutzen.

Eine besonders bevorzugte Ausführungsform der Erfindung kennzeichnet sich dadurch, daß die Wende- und Haltevorrichtung zugleich als Zustellvorrichtung für das Paket ausgebildet ist. Dies ist insofern von besonderem Vorteil, als nach dem Wenden des Pakets ein erneutes Zustellen gegen die Schneidebene erforderlich ist und somit dieses Ausrichten auch der zweiten Längs-Schnittlinie gegenüber der Schneidebene durch ein und dieselbe Vorrichtung vorgenommen werden kann. Das Zustellen kann man sogar während des Wendens einleiten und zumindest weitgehend durchführen, wodurch sich Bearbeitungszeit einsparen läßt.

In weiterer Ausgestaltung der Erfindung wird vorgeschlagen, daß der Zustellvorrichtung eine mit einem Richtanschlag od. dgl. zusammenwirkende oder diesen aufweisende Übergabevorrichtung vorge-

schaltet ist. Das Furnierpaket wird zunächst, insbesondere von
Hand, auf diese Übergabevorrichtung aufgesetzt und am Richtanschlag ausgerichtet. Hernach werden die Schnittlinien festgelegt
bzw. markiert, wobei dieser Vorgang mit dem Einbringen in die
Wende-Halte-Zustellvorrichtung kombiniert sein kann. Man muß
allerdings dafür sorgen, daß der Richtanschlag das Einbringen in
die Wende-Halte-Zustellvorrichtung nicht behindert bzw. überhaupt
zuläßt.

Eine andere Variante der Erfindung ist dadurch gekennzeichnet, daß
die Übergabevorrichtung zugleich einen Teil der Festleg- bzw.
Markierungsvorrichtung bildet und letztere mit einem Richtlicht
bzw. einer Markierungseinheit ausgestattet ist. Mit Hilfe der
Übergabevorrichtung wird das Furnierpaket gegenüber der ortsfesten
Festleg- bzw. Markierungsvorrichtung so lange verschoben, bis die
richtige Schnittlinie festgelegt bzw. markiert ist. Dasselbe gilt
dann auch für das nachfolgende Festlegen der zweiten Längs-
Schnittlinie. Im Falle der Festlegung oder Markierung von
Querschnittlinien kann das Paket während dieses Vorgangs ebenfalls
auf der Übergabevorrichtung festgehalten sein.

Eine Weiterbildung dieser Vorrichtung mit einem gegenüber der
Schneidebene ortsfesten Richtlicht besteht darin, daß der Richtanschlag in fester Zuordnung zum Richtlicht montiert und absenkbar ausgebildet ist, und daß die Übergabevorrichtung zwischen
zwei Endstellungen hin und her verschiebbar ist. Nach dem Ausrichten des Pakets am versenkbaren Richtanschlag wird letzterer in eine wirkungslose Stellung verbracht, und nachfolgend kann man die Übergabevorrichtung mit dem darauf festgehaltenen Paket zum Festlegen bzw. Markieren der ersten Längs-Schnittlinie gegen die entsprechende Vorrichtung hin verschieben, sofern das Festlegen oder Markieren nicht schon vor dem Absenken des Richtanschlags erfolgt ist. Nach dem Festlegen bzw. Markieren erfolgt ein Weiterschieben der Übergabevorrichtung zum Festlegen bzw. Markieren der zweiten Längs-Schnittlinie. Nachfolgend, gegebenenfalls auch zuvor, kann man eventuell auch noch Quer-Schnittlinien festlegen bzw. markieren. Der Richtanschlag wird also von der Übergabevorrichtung überfahren, und zumindest in ihrer zweiten Endstellung befindet sie sich mit dem Paket, wenigstens ein Stück weit, in der Wende-Halte-Zustellvorrichtung. Selbstverständlich muß letztere nicht nur entsprechend ausgebildet, sondern auch "geöffnet" sein, damit das Paket ohne Behinderung durch die Halteelemente od. dgl. eingefahren werden kann. Nach der Übergabe des Furnierpakets an die Wende-Halte-Zustellvorrichtung wird die Übergabevorrichtung wieder in ihre erste Verschiebestellung bzw. Ausgangsstellung zurückgebracht.

Eine besonders bevorzugte Ausführungsform der Erfindung sieht vor, daß der Richtanschlag um den Betrag des sogenannten minimalen Fügeverlusts gegenüber der Ebene des Richtlichts zur Zustell-Wende-Haltevorrichtung hin versetzt ist. Wenn man also das Paket am Richtanschlag anlegt, so markiert ein Richtlicht bereits eine Längs-Schnittlinie, die das Abschneiden des minimalen Fügeverlusts gewährleistet. Soll ein größerer Randbereich abgeschnitten werden, so muß man zuvor den Richtanschlag absenken und anschließend das Paket mit der Übergabevorrichtung um den notwendigen Betrag gegen die Schneidebene hin verschieben. Entsprechendes gilt im übrigen auch beim Markieren des Pakets, falls nicht mit Richtlicht gearbeitet wird.

Eine weitere zweckmäßige Ausbildung der Erfindung besteht darin, daß die Zustell-Wende-Haltevorrichtung aus zwei in gegenläufigem Sinne umlaufenden, endlosen, über je eine vordere und hintere Umlenkwalze od. dgl. geführten Transportbändern od. dgl. mit zueinander parallelen Trumen mit Vor- und Rückwärtslauf besteht. Aus verschiedenen Gründen ist es vorteilhaft, wenn man nicht Bänder mit einer der Länge des Furnierpakets entsprechenden Breite verwendet, sondern statt dessen obere und untere Bandgruppen aus schmäleren, im seitlichen Abstand angeordneten Teilbändern. Das arbeitende Trum des unteren Transportbands bzw. der unteren Transport-Teilbänder übergreift zweckmäßigerweise wenigstens teilweise einen Maschinentisch.

Eine andere Ausgestaltung der Erfindung kennzeichnet sich dadurch, daß zur Vergrößerung des das Paket aufnehmenden Spaltraums zwischen den Transportbändern od. dgl. beide, insbesondere parallel zu sich, abstellbar sind, d.h. das untere nach unten und das obere nach oben. Dieser Stellung kommt insbesondere beim Einbringen des Furnierpakets und beim Abtransport des an seinen Längskanten beschnittenen Furnierpakets Bedeutung zukommt. Eine weitere Variante der Erfindung sieht vor, daß die Drehachse der Zustell-Wende-Haltevorrichtung etwa in der Ebene des oberen Trums des unteren Transportbands od. dgl. gelegen ist und beide Transportbänder quer zur Ebene ihrer am Paket anliegenden Trume synchron etwa um einen der maximal zulässigen Paketdicke entsprechenden Betrag verstellbar sind. Hierdurch ist das Abschneiden unterschiedlich dicker Furnierpakete ohne weiteres möglich. Da jedoch nach dem Wenden das Furnierpaket gegenüber der Schneideinrichtung um Paketdicke zu tief angeordnet wäre, muß man es während des Wendens oder nach Beendigung des Wendevorgangs um eben diese Paketdicke wieder anheben. Damit die Spannung beim Zusammenhalten des Pakets erhalten bleibt, muß das Anheben der beiden "Hälften" der Haltevorrichtung synchron erfolgen. Dies läßt sich über eine geeignete Steuerung in einfacher Weise problemlos erreichen. Zweckmäßigerweise arbeitet man dabei mit hydraulischen Hubeinrichtungen.

Die Auflagefläche des unteren Transportbands od. dgl. verläuft in vorteilhafter Weise in der Transport- und Wende-Ausgangsstellung etwa auf gleichem Niveau wie die Stützfläche der Übergabevorrichtung. Auf diese Weise ist eine problemlose Übernahme des von der Übergabevorrichtung eingebrachten Stapels durch das untere Transportband möglich. Es wird nach dem Einbringen des Stapels so weit angehoben, bis das Furnierpaket aufliegt. Nachfolgend kann man dann die Übergabevorrichtung in ihre Ausgangsstellung zurückbringen.

Die Schneidebene befindet sich zweckmäßigerweise im selben Abstand von der geometrischen Drehachse der Zustell-Wende-Haltevorrichtung wie die Richtlichtebene von dieser Achse. Dies vereinfacht in besonderer Weise das Vorschieben des Furnierpakets nach dem Festlegen der zweiten Längs-Schnittlinie bis zur Schneidebene. Dasselbe gilt für das nochmalige Vorschieben des Pakets zur Schneidebene nach dem Wenden. Die Länge des Vorschubwegs entspricht der Differenz zwischen dem Abstand von Richtlicht- und Schneidebene abzüglich der festgelegten Breite des Pakets zwischen den beiden Längs-Schnittlinien.

Wenn man die Zustell-Wende-Haltevorrichtung in Weiterbildung der Erfindung zusammen mit der Übergabevorrichtung, ausgehend von einer mittleren Normalstellung, um eine zur geometrischen Achse der Zustell-Wende-Haltevorrichtung sowie zur Furnierblattebene senkrechte Achse nach beiden Drehrichtungen hin begrenzt drehen kann, so lassen sich auf einfache Weise auch winklig zueinander angeordnete Längs-Schnittlinien festlegen. Das Richtlicht od. dgl. nimmt selbstverständlich an dieser Drehbewegung nicht teil. Außerdem ist die jeweilige Drehlage zweckmäßigerweise durch entsprechende Feststellmittel zu sichern. Dies führt zu einem besonders sparsamen Beschneiden des Furnierpakets, das zur Anwendung kommen kann, wenn man einen besonderen Effekt erzielen will oder wenn eine schräg verlaufende Stoßlinie im Furnierbild nicht störend wirkt.

Eine andere bevorzugte Ausführungsform der Erfindung kennzeichnet sich dadurch, daß sich in Zustellrichtung hinter der Zustell-Wende-Haltevorrichtung aber vor dem Schneidmesser ein anhebbarer Druckbalken und gegenüberliegend von diesem eine absenkbare Schneidleiste oder ein absenkbares Untermesser befindet. Geschnitten wird im Normalfalle mit dem zustellbaren oberen Schneidmesser. Beim Ausbringen des Furnierpakets kann es vorteilhaft sein, wenn sich die Schneidleiste oder ein unteres absenkbares Messer in eine wirkungslose Stellung verlagern, also beispielsweise absenken läßt. Der Druckbalken wird erst dann zugestellt, wenn das Furnierpaket gegenüber der Schneidebene korrekt ausgerichtet ist. Er arbeitet mit der absenkbaren Schneidleiste in der Weise zusammen, daß das Paket zwischen beiden eingeklemmt wird, so daß es sich an dem zu beschneidenden Längsbereich nicht aufspreizen kann. Im übrigen ist das Absenken der Schneidleiste schon deshalb von Vorteil, weil das Paket beim Vorschieben in den Schneidbereich an seiner vorderen Längskante möglicherweise leicht aufgespreizt ist, und dies könnte Anlaß zu einem Verhaken mit dem Druckbalken sein. Das Aufspreizen kann beispielsweise dadurch auftreten, daß der vorder Längsbereich beim Vorfahren in den Schneidbereich die Zustell-Wende-Haltevorrichtung verlassen hat oder gerade verläßt. Der Großteil des Pakets ist jedoch von der Zustell-Wende-Haltevorrichtung noch erfaßt, so daß ein gegenseitiges Verschieben der einzelnen Furnierblätter des Pakets nicht stattfinden kann.

- 13 -

Eine weitere Variante der Erfindung besteht darin, daß sich in Zustellrichtung hinter der Schneidebene eine gegenüber der Zustell-Wende-Haltevorrichtung ausrichtbare und in Arbeitsstellung bringbare zusätzliche Fördervorrichtung befindet. Insbesondere letztere kann auf einfache Weise in eine Übernahmeposition gebracht werden, wenn die Schneidleiste absenkbar ist. Andererseits kann man diese zusätzliche Fördervorrichtung nicht in ständiger fester Zuordnung zur Schneidebene halten, weil die abgeschnittenen Ränder zwischen der Schneidebene und dem zugeordneten Ende dieser zusätzlichen Fördervorrichtung nach unten abtransportiert werden müssen, beispielsweise über eine Rutsche od. dgl. An letztere kann sich eine weitere Verarbeitungsstation für den Abfall anschließen, beispielsweise eine Häckselvorrichtung.

In weiterer Ausgestaltung der Erfindung ist vorgesehen, daß die zusätzliche Fördervorrichtung den Raum zwischen der Schneidvorrichtung für die Längskanten des Pakets und einer zusätzlichen Schneidvorrichtung für wenigstens eine Querkante des Pakets überbrückt. Sie kann mit dieser zusätzlichen Schneidvorrichtung zu einer Einheit zusammengefaßt sein. Falls an den Querkanten nicht geschnitten wird, kann die zusätzliche Fördervorrichtung das von der Schneidmaschine übernommene Furnierpaket an eine weitere Station oder eine Abtransporteinrichtung weitergeben.

Die zusätzliche Schneidvorrichtung ist in vorteilhafter Weise als Doppelschneidvorrichtung für beide Querkanten und insbesondere auch als Vorrichtung zum Anbringen wenigstens einer Banderole ausgebildet. Dabei ist es dann zweckmäßig, wenn die Messer gegenüber der festgelegten Schneidlinie ausgerichtet werden und das Paket währenddessen stillsteht.

Eine Weiterbildung der Maschine besteht darin, daß die Festleg- bzw. Markierungsvorrichtung zum Festlegen bzw. Markieren zweier Längs-und zweier Querlinien ausgebildet ist. Demnach kann als das Furnierpaket bereits vor dem ersten Schnitt hinsichtlich seiner endgültigen Abmessungen vollständig festgelegt werden. Auch dies trägt zur Beschleunigung des gesamten Arbeitsablaufs bei.

Um das an seinen Längsseiten beschnittene Paket gegenüber den Schneidmessern der zusätzlichen Schneidvorrichtung korrekt ausrichten zu können, besitzt die zusätzliche Schneidvorrichtung in weiterer Ausbildung der Erfindung einen absenkbaren Richtanschlag für die in Zustellrichtung vordere beschnittene Längskante des Pakets. In abgesenkter Stellung ermöglicht er den ungehinderten Weitertransport nach dem Querabschneiden.

Eine bevorzugte Ausführungsform der Erfindung besteht darin, daß die zusätzliche Schneidvorrichtung beidseits je eine in Längsrichtung des Pakets zustellbare Schneideinheit aufweist, die wenigstens je einen zustellbaren Druckbalken oder Niederhalter, eine zustellbare Schneidleiste oder ein zustellbares Untermesser sowie ein zustellbares Schneidmesser umfaßt. Diese Schneideinheiten werden vorteilhafterweise gleichzeitig gegenüber dem Paket ausgerichtet und ausgelöst. Im Falle markierter Linien erfolgt das Ausrichten, bis die Detektoreinrichtungen die Markierungen gesichtet haben, während im Falle einer Festlegung der Schneidlinien die Zustellung über eine entsprechende Steuerung erfolgt, welche die Verbindung der Schneideinheiten mit der Feststellvorrichtung herstellt.

Eine andere Ausgestaltung der Erfindung sieht vor, daß sich in Zustellrichtung an die zusätzliche Schneidvorrichtung eine Abstapelvorrichtung anschließt, deren Aufnahme dem Abgabeende der zusätzlichen Fördervorrichtung zugeordnet ist, wobei die Stellung des Abgabeendes gegenüber der Aufnahme veränderbar ist. Auf einer Palette od. dgl. der Abstapelvorrichtung kann nunmehr ein beschnittener Stapel nach dem anderen abgesetzt werden. Wenn die Palette voll ist, kann man sie zur Seite oder nach unten hin entfernen, um Platz für die nächste Palette zu schaffen.

Die Übergabevorrichtung ist mit einem mit der Festlegvorrichtung zusammenwirkenden Weggeber od. dgl. versehen oder durch diesen steuerbar, wobei die Wegstrecke zwischen den beiden Lagen des Pakets beim Festlegen der beiden Längs-Schnittlinien eine Steuerungsgröße für den Vorschubweg des Pakets bildet. Beim Festlegen der ersten Längs-Schnittlinie wird die momentane Stellung der Übergabevorrichtung und damit auch des darauf unverschiebbar gehaltenen Furnierpakets festgestellt und vorzugsweise einprogrammiert. Über den Weggeber wird dann beim Festlegen der zweiten Längs-Schnittlinie die dann erreichte Stellung des Pakets ermittelt, und damit sind dann die beiden die Breite des Pakets bestimmenden Werte ermittelt und vorzugsweise auch zu Steuerungszwecken einprogrammiert. Aufgrund des Fixabstands zwischen der
beim Festlegen eingenommenen Lage der zweiten Längs-Schnittlinie
gegenüber der Schneidebene ist auch der Vorschubweg für die erste
Vorschubbewegung durch die Zustell-Wende-Haltevorrichtung festgelegt. Um Übertragunsfehler zu vermeiden, ist in bevorzugter Weise
vorgesehen, daß man beim Festlegen der beiden Längs-Schnittlinien
die momentanen Stellungen bzw. Koordinatenwerte, beispielsweise
durch Niederdrücken einer Taste, quittiert und somit einprogrammiert. Der Nullpunkt für die Vorschubbewegung wird durch die Ebene des Richtlichts od. dgl. festgelegt. In vergleichbarer Art
kann man gleichzeitig oder nachfolgend auch die Quer-Schnittlinien festlegen und deren Werte, also eine Verstellung in Y-Richtung, ebenfalls quittieren und dadurch einprogrammieren.

In diesem Sinne besteht eine Weiterbildung der Erfindung darin,
daß der Weggeber beim Festlegen der ersten Längs-Schnittlinie den
Nullpunkt der Verschiebebewegung der Zustellvorrichtung markiert
bzw. auf den Wegwert Null stellbar ist und die beiden Meßeinheiten für die Querlinien mit je einem oder mit einem gemeinsamen
Weggeber od. dgl. zur Ermittlung des querliegenden Abstands versehen sind.

Die Weggeber od. dgl. für die beiden Längs- und die beiden Querlinien sind bei einer bevorzugten Ausführungsform der Erfindung
mit einem Rechner zur Ermittlung der Fläche jedes beschnittenen
Furnierblatts des Furnierpakets verbunden. Damit läßt sich bereits vor dem ersten Schnitt die gesamte Fläche ermitteln, die
mit den Furnieren dieses Furnierpakets furniert werden kann.

Eine andere Variante der Erfindung sieht vor, daß der Rechner zur Ermittlung der Furnierblattgröße mit einem Drucker zum Bedrucken von Banderolen, Begleitpapieren und dgl. verbunden ist. Somit lassen sich die beim Festlegen der Schnittlinien ermittelten Daten nicht nur zur Steuerung der Vorschubbewegungen der Zustell-Wende-Haltevorrichtung und der zusätzlichen Schneidvorrichtungen ausnutzen, sondern auch noch für alle möglichen zusätzlichen Aufgaben, nicht zuletzt für die Ausstellung von Begleitpapieren, Rechnungen und dgl. sowie zum unmittelbaren Aufdrucken der interessierenden Werte auf einer oder mehreren vorher angebrachten Banderolen. Letztere haben im übrigen auch noch den Vorteil, daß sie das beschnittene Furnierpaket zusammenhalten. Letzteres kann vor allen Dingen dann von Bedeutung sein, wenn dieser Furnierstapel in einer zusätzlichen Einrichtung weiterverarbeitet werden soll, beispielsweise in einer Fügemaschine.

Eine weitere Ausbildung der Erfindung ist durch eine Vorrichtung zur Ermittlung der Höhe des beim Abschneiden gepreßten Pakets gekennzeichnet. Wenn man die Furnierdicke kennt, was der Normalfall ist, so läßt sich über die festgestellte Höhe leicht auch die maximal zu furnierende Fläche ermitteln. Dabei ist es dann besonders vorteilhaft, daß die Vorrichtung zur Ermittlung der Pakethöhe zur Bestimmung der gesamten Furnierfläche eines Pakets mit dem Rechner verbunden ist. Der Rechner kann dann die ermittelte Gesamt-Furnierfläche eines Pakets und/oder die Pakethöhe auf die Banderole, Begleitpapiere und dgl. aufdrucken. Es läßt sich auf diese Weise sogar der Preis automatisch errechnen.

Die Erfindung bezieht sich, wie bereits ausgeführt wurde, nicht nur auf die vorstehend beschriebene Maschine, sondern auch auf ein Verfahren, welches mit dieser Maschine durchgeführt wird. Insoweit besteht die Aufgabe der Erfindung darin, das bisherige Verfahren zum Beschneiden eines Furnierpakets dahingehend zu verbessern, daß der Ablauf rascher, genauer und sicherer erfolgt als bislang.

Die Lösung dieser Aufgabe ergibt sich bei einem Verfahren gemäß dem Oberbegriff des Anspruchs 29 nach dem kennzeichnenden Teil dieses Anspruchs. Bei einem gleichwertigen Verfahren ergibt sich die Lösung aus dem kennzeichnenden Teil des Anspruchs 30.

Im Gegensatz zum vorbekannten Verfahren, bei dem das Furnierpaket nach dem ersten Abschneiden etwa in die Ausgangsstellung zurückgebracht und von Hand gewendet werden mußte, um es daraufhin erneut in den Schneidbereich zu bringen, damit die zweite Längskante beschnitten wird, wird das Paket bei den genannten erfindungsgemäßen Verfahren während des Wendens festgehalten und auch die Zustellung zum Schneidbereich erfolgt bei gleichzeitigem Zusammendrücken des Pakets, so daß Verschiebungen innerhalb des Pakets ausgeschlossen sind.

Falls die Längsschnittlinien nicht markiert, sondern lediglich festgelegt werden, so erfolgt dieses Festlegen vor dem Einbringen
in den Schneidbereich der Schneidmaschine, wobei dann beim Festlegen jeder Längs-Schnittlinie jeweils auch ihr Abstand von der
Schneidebene erfaßt und zum gesteuerten Vorschub mit der Zustell-
Wende-Haltevorrichtung ausgenutzt wird. Dies gilt sowohl für das
erste Zustellen zur Schneidebene als auch das zweite Zustellen
nach dem Wenden des zuvor beschnittenen Pakets.

Sinngemäß läuft das Verfahren beim Anbringen von Markierungslinien oder Referenzlinien ab, wobei allerdings keine Steuerung
über zuvor ermittelte Werte erfolgt, sondern ein Vorschub bis zum
Unterfahren der Detektorebene durch die jeweilige Markierungslinie.

Die beiden Längs-Schnittlinien werden in vorteilhafter Weise vor
dem Einbringen des Pakets in eine durch die Festlegvorrichtung
oder durch Eingabe, insbesondere der festgelegten Werte, steuerbare Zustell-Wende-Haltevorrichtung festgelegt. Dies ermöglicht
das vollständige Festlegen der Schnittlinien außerhalb der Zustell-Wende-Haltevorrichtung, so daß ein zweites Paket "ausgemessen" werden kann, während sich das erste Paket noch in der Zustell-Wende-Haltevorrichtung bzw. der Schneidmaschine befindet.

Eine Weiterbildung des Verfahrens besteht darin, daß beide Quer-
Schnittlinien vor dem Einbringen des Pakets in eine durch die
Festlegvorrichtung oder durch Eingabe, insbesondere der festgelegten Werte, steuerbare Zustell-Wende-Haltevorrichtung festgelegt werden. Bedeutung kommt den hierbei festgelegten Werten allerdings erst nach dem Verlassen der Zustell-Wende-Haltevorrichtung zu, wenn sie von letzterer an die entsprechende Querschneidvorrichtung übergeben worden sind.

Eine andere Variante des Verfahrens kennzeichnet sich dadurch,
daß das Paket nach dem Festlegen der ersten Längs-Schnittlinie
mittels einer durch die Festlegvorrichtung oder durch Eingabe der
festgelegten Werte steuerbare Zustell-Wende-Haltevorrichtung gegen die Schneidebene hin verschoben wird und diese Zustellbewegung zur Festlegung der zweiten Längs-Schnittlinie unterbrochen
wird. Beim Festlegen der letzteren befindet sich das Paket vorzugsweise weitgehend oder vollständig in der Zustell-Wende-Haltevorrichtung. Der Platzbedarf für eine nach diesem Verfahren arbeitende Maschine ist möglicherweise etwas geringer. Andererseits
muß aber beim Festlegen der Schneidlinien eines nachfolgenden Pakets jeweils auf das momentan zu schneidende Paket Rücksicht genommen werden.

Eine weitere Variante des Verfahrens kennzeichnet sich dadurch,
daß das Paket nach dem Festlegen der ersten Längs-Schnittlinie
und der beiden Querschnittlinien mittels einer durch die Festlegvorrichtung oder durch Eingabe der festgelegten Werte steuerbare Zustell-Wende-Haltevorrichtung gegen die Schneidebene hin
verschoben wird und diese Zustellbewegung zum Festlegen der zweiten Längs-Schnittlinie unterbrochen wird. Das Verfahren dieser Variante läuft im Grunde genommen gleich ab wie das vorherige, jedoch mit dem Unterschied, daß zusätzlich zur ersten Längs-Schnittlinie auch noch zwei Quer-Schnittlinien festgelegt werden, bevor man die zweite Längs-Schnittlinie festlegt.

Eine weitere Ausbildung des Verfahrens sieht vor, daß die Längs-Schnittlinien mittels eines stationären Richtlichts oder einer anderen, vorzugsweise optischen Festlegvorrichtung festgelegt werden, das bzw. die sich am Einlaß der Zustell-Wende-Haltevorrichtung oder in einem vorgegebenen Abstand davor befindet. Im Hinblick auf eine Automatisierung dieses Vorgangs kann man an Stelle eines Richtlichts, beispielsweise eine Festlegvorrichtung verwenden, die selbsttätig den vorderen Rand des zugestellten Furnierpakets abtastet und erst dann die Festlegung der Längs-Schnittlinie zuläßt, wenn der beispielsweise schräge oder unregelmäßige Rand auf seiner gesamten Länge bis zu dieser Festlegvorrichtung vorgedrungen ist. Das Abtasten muß hierbei punkte- oder abschnittweise erfolgen.

Weitere vorteilhafte Ausgestaltungen dieser Verfahren ergeben sich sinngemäß aus der vorstehenden Beschreibung der Maschine und außerdem auch noch aus der nachstehenden Beschreibung eines Ausführungsbeispiels der Maschine.

Die Zeichnung zeigt ein derartiges Ausführungsbeispiel.

Hierbei stellen dar:


Fig. 1 In schematischer Darstellung eine Seitenansicht der
       Schneidmaschine und den zugehörigen Vorrichtungen,


Fig. 2 eine Draufsicht auf Fig. 1.


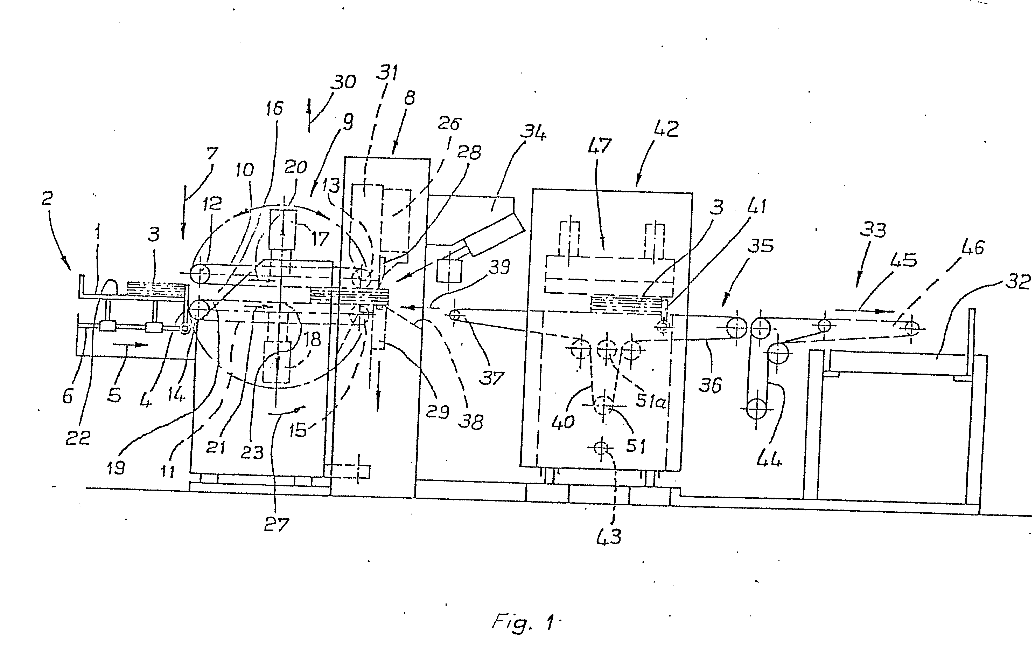

Auf einen Schlitten oder Wagen 1 einer Übergabevorrichtung 2 wird
ein Furnierpaket 3 aufgelegt und an einem Richtanschlag 4 angelegt. Letzterer ist absenk- oder abklappbar ausgebildet, so daß
er nach dem genauen Ausrichten des Furnierpakets aus seiner in
Fig. 1 zu sehenden Arbeitsstellung gebracht werden kann. Der
Schlitten oder Wagen 1 kann von seiner aus Fig. 1 ersichtlichen
Ausgangsstellung im Sinne des Pfeils 5 entlang einer Führung 6
verschoben werden. Auf die Oberfläche des Furnierpakets 3 ist ein
durch einen Pfeil symbolisiertes Richtlicht 7 gerichtet, welches
den rechten Randbereich strichförmig beleuchtet. Das Richtlicht
ist gegenüber der Anschlagfläche des Richtanschlags 4, entgegen
dem Pfeil 5 um den sogenannten minimalen Fügeverlust zurückversetzt. Das heißt bei am Richtanschlag 4 anliegenden Paket kann
man das Richtlicht in den meisten Fällen auf seiner gesamten
Länge auf der Paketoberfläche sehen. Wenn die Bedienungsperson
die Feststellung getroffen hat, daß man mehr als den minimalen
Fügeverlust nicht abzuschneiden braucht, weil dies bereits zu einer einwandfreien Kantenbildung am vorderen Paketlängsrand führt,
so wird in nachstehend noch zu beschreibender Weise die erste Längs-Schnittlinie festgelegt. Anschließend transportiert man das Furnierpaket 3 mit Hilfe des Schlittens oder Wagens 1 im Sinne des Pfeils 5 weiter, bis das Richtlicht 7 auf den in Vorschubrichtung hinteren Randbereich des Furnierpakets scheint, wobei auch am hinteren Randbereich so wenig wie möglich abgeschnitten werden soll. Sobald die Bedienungsperson zu der Überzeugung gekommen ist, daß das Richtlicht nunmehr die zweite Längs-Schnittlinie korrekt markiert, wird der Schlitten 1 angehalten und auch die zweite Längs-Schnittlinie festgelegt. In vergleichbarer Art können am Paket, insbesondere vor dem Festlegen der zweiten Längs-Schnittlinie, auch die beiden Quer-Schnittlinien mit Hilfe eines Richtlichts festgelegt werden. Das Anbringen von Markierungslinien erfolgt sinngemäß.

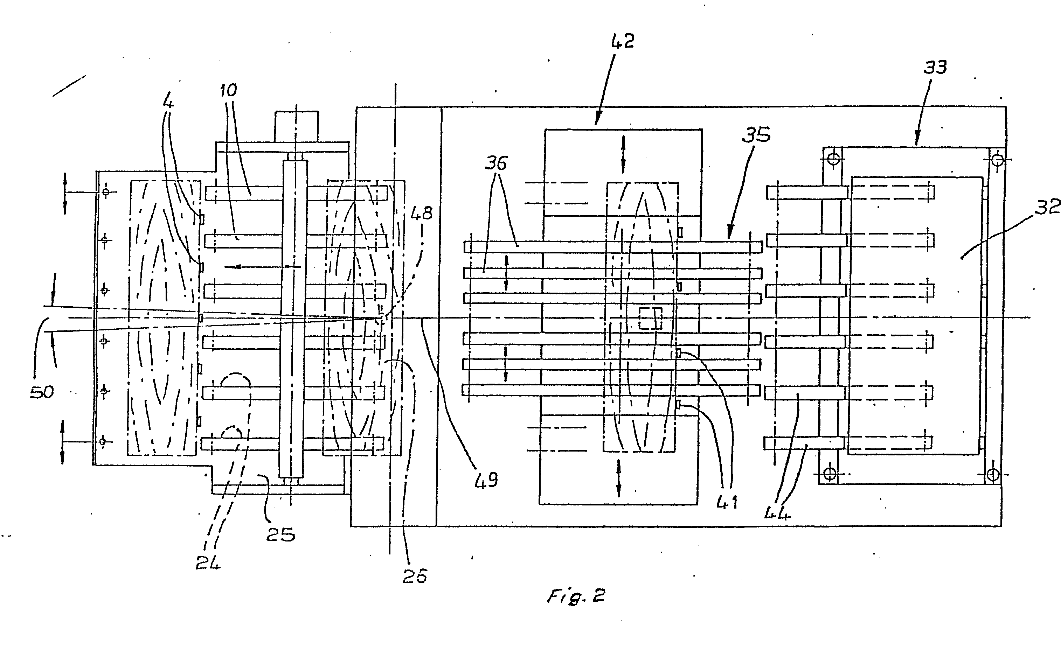

Zwischen der Schneidmaschine 8 und der Übergabevorrichtung 2 befindet sich eine Zustell-Wende-Haltevorrichtung 9. Ein wesentliches Element der letzteren sind ein oberes und unteres endloses Transportband 10 bzw. 11, wobei das obere über zwei Umlenkrollen 12 und 13 und das untere über zwei Umlenkrollen 14 und 15 geführt ist. Zwischen beiden befindet sich ein Spaltraum 16, welcher das Furnierpaket aufnimmt, und der dadurch vergrößerbar ist, daß man das obere Transportband nach oben und das untere nach unten verlagert. Hierzu dienen vorzugsweise die symbolisch eingezeichneten Verstelleinrichtungen 17 und 18. Zweckmäßigerweise bestehen sowohl die oberen als auch die unteren endlosen Transportbänder 10 bzw. 11 aus einer Gruppe von Teilbändern, die im gleichen gegenseitigen Seitenabstand angeordnet sind. Infolgedessen können auch die Endlosrollen aus einzelnen Teilrollen bestehen (Fig. 2). Im übrigen entnimmt man der Fig. 2, daß auch der Richtanschlag 4 gabelartig ausgebildet ist und aus einer Gruppe von Anschlagelementen besteht. Sie sitzen beim Ausführungsbeispiel auf Lücke zu den Bandteilen der Transportbänder 10,11.

Das arbeitende Trum 19 des unteren Transportbands 11 wird vor dem Einbringen des Furnierpakets 3 in die Zustell-Wende-Haltevorrichtung 9 abgesenkt. Nach dem Abklappen des Richtanschlags 4 kann nunmehr das Furnierpaket 3 ohne Behinderung in den Spaltraum 16 eingebracht werden. Wenn der automatisch festgelegte minimale Fügeverlust noch keinen sauberen ersten Längsschnitt ergeben würde, so erfolgt das Einbringen in den Spaltraum gegebenenfalls auch schon vor dem Festlegen der ersten Längs-Schnittlinie. Auf jeden Fall ist aber das Furnierpaket 3 weitgehend im Spaltraum, wenn die zweite Längs-Schnittlinie festgelegt wird. Wenn man nunmehr das arbeitende Trum 19 des unteren Transportband 11 anhebt, so kann man das Furnierpaket vom Schlitten oder Wagen 1 auf das untere Transportband übergeben und den Schlitten oder Wagen 1, entgegen dem Pfeil 5 ohne das Paket wieder in seine Ausgangsstellung zurückschieben. Mit dem Anheben des unteren Tranportbands 11 kann gleichzeitig ein Festhalten zwischen den beiden arbeitenden Trumen der beiden Transportbänder erfolgen. Gegebenenfalls kann man gleichzeitig oder nachfolgend auch noch das obere Transportband zustellen. Das Paket ist nun sicher gehalten und kann durch entsprechenden Antrieb der Transportbänder im Sinne der Pfeile 20 und 21 zur Schneidmaschine 8 hin transportiert werden Das arbeitende Trum 19 des unteren Transportbands 11 befindet sich beim Festhalten des Pakets 3 etwa auf demselben Höhenniveau wie die Auflagefläche 22 des Schlittens oder Wagens 1. Außerdem liegt in dieser Ebene auch die geometrische Achse 23 einer Drehachse oder von Drehzapfen der Zustell-Wende-Haltevorrichtung 9. Die arbeitenden Trume 19 der Teilbänder des unteren Transportbands 11 laufen in Nuten 24 eines Arbeitstisches 25 der Vorrichtung 9. Wenn man diese Teilbänder enspannt, indem man beispielsweise eine Rolle gegen die andere hin bewegt, so treten die tragenden Trume der Teilstücke des unteren Transportbands 11 in diese Nuten ein, wodurch dann das Furnierpaket auf der Tischoberfläche und nicht mehr auf dem unteren Transportband aufliegt. Durch das Spannen treten die Bänder über die Tischoberfläche hinaus und zugleich erfolgt dann bei richtiger Stellung des oberen Transportbands 10 ein klemmendes Festhalten des Furnierpakets.

Die Ebene des Richtlichts 7 ist von der geometrischen Achse 23 der Zustell-Wende-Haltevorrichtung 9 gleich weit entfernt wie die Schneidebene 26. Diese Abstände bilden feste Rechengrößen, die man für die automatische Vorschubsteuerung ausnutzen kann. Wenn die zweite Längs-Schnittlinie festgelegt wird und man somit den Abstand der beiden Längs-Schnittlinien kennt, so ergibt sich der Vorschubweg bis zur korrekten Positionierung der ersten LängsSchnittlinie in der Schneidebene 26 aus der Differenz des Abstands zwischen der Richtlichtebene 7 und der Schneidebene 26 a-

züglich des Seitenabstands der ersten von der zweiten Längs-Schnittlinie.

Beim Festlegen sowohl der ersten als auch der zweiten Längs-Schnittlinie kann man die ermittelten Wegwerte in einen Rechner geben, in den auch die relevanten Maschinenwegwerte einprogrammiert sind. Die Bedienungsperson muß demnach lediglich beim Festlegen der ersten und zweiten Längs-Schnittlinie die momentane Stellung des Furnierpakets gegenüber der Ebene des Richtlichts 7 oder einer anderen Festlegvorrichtung quittieren und ein angeschlossener Rechner errechnet dann den Vorschubweg bis zum Ausrichten der ersten Längsschnittlinie gegenüber der Schneidebene 26. Der Rechner steuert die Antriebsmotoren für die Transportbänder 10 und 11, d.h. er gibt die entsprechenden Befehle für Start und Stop dieser Transportbänder. Entsprechendes geschieht auch für das nachfolgend noch zu beschreibende Abschneiden entlang zweier Quer-Schnittlinien an den beiden Paketenden. Außerdem kann man die ermittelten Werte für die Längs-Schnittlinien (X-Achse) und die Quer-Schnittlinien (Y-Achse) vom Rechner an einen Drucker vermitteln, der eine nach den Längsschnitten angebrachte Banderole bedruckt. Evtl. kann man diese Werte auch zum Bedrucken von Begleitpapieren oder für die Rechnungsstellung u. dgl. heranziehen.

Nach dem ersten Längsschnitt wird die Zustell-Wende-Haltevorrichtung, beispielsweise im Sinne des Pfeils 27, um 180° gedreht. Dadurch wird dann das Furnierpaket wieder der Übergabevorrichtung zugeordnet. Die Schnittkante liegt am Ende dieser 180°-Drehung wieder in der Ebene des Richtlichts 7, so daß die Transportbänder 10 und 11 das Paket nochmals um denselben Betrag gegen die Schneidebene hin transportieren müssen. Auch dies erfolgt rechnergesteuert. Während des Wendens bleibt das Paket durch die Vorrichtung 9 stets festgehalten, so daß ein gegenseitiges Verschieben der einzelnen Furnierblätter des Pakets 3 nicht stattfinden kann.

Weil sich das Paket beim Abschneiden entlang der ersten Längs-Schnittlinie gewissermaßen oberhalb der durch die Drehachse 23 gelegten Horizontalebene befindet, würde das Paket bei lediglich einfachem Wenden um 180° nunmehr unterhalb dieser Ebene angeordnet sein. Um es wieder in die richtige Zuordnung zum Schneidmesser 28 und zu einer gegenüberliegenden Schneidleiste 29 oder einem Gegenmesser zu bringen, müssen die beiden Transportbänder mit dem Paket 3 im Sinne des Pfeils 30 um Pakethöhe angehoben werden. Dieser Hebevorgang kann zugleich während des Drehens vorgenommen werden. Hierbei ist allerdings darauf zu achten, daß die beiden arbeitenden Trume das Paket sowohl während des Drehens als auch der Querverschiebung stets mit gleicher Kraft zusammenhalten. Eine starre Kupplung zwischen dem oberen und unteren Transportband ist nicht möglich, wenn man unterschiedliche Pakethöhen verarbeiten will.

Im übrigen kann der gegenseitige Abstand der arbeitenden Trume der beiden Transportbänder bei festgehaltenem Paket mittels einer geeigneten Vorrichtung erfaßt werden. Diesen Wert kann man zusammen mit einer Dickenangabe eines Furnierblatts in den Rechner geben, so daß dieser einerseits die Anzahl der Furnierblätter pro Stapel errechnet und andererseits auch die Gesamtfurnierfläche bestimmt, die sich nach dem Abschneiden aller vier Ränder ergibt. Auch diese Werte können ausgedruckt und für weitere Zwecke ausgenutzt werden. Die Furnierpaketdicke kann auch an anderer Stelle ermittelt werden, beispielsweise im Bereich des Druckbalkens.

Die Schneidmaschine 8 besitzt außer dem bereits erwähnten Schneidmesser 28 und der heb- und senkbaren Schneidleiste 29 oder einem entsprechenden Gegenmesser auch noch einen Druckbalken 31.

Die bislang erläuterten Arbeitsgänge laufen im einzelnen wie folgt ab:

Nach dem Spannen des vermessenen Pakets erfolgt das Zustellen zur Schneidebene 26 bei abgesenkter Schneidleiste und hochgehobenem Druckbalken 31. Wenn die erste Längs-Schnittlinie gegenüber der Schneidebene ausgerichtet, also die Transportbänder 10 und 11 zum Stillstand gekommen sind, wird die absenkbare Schneidleiste 29 hochgehoben und mit minimaler Verzögerung nachfolgend der Druckbalken 31 abgesenkt. Das Paket wird nunmehr im Bereich der ersten Längs-Schnittlinie zusätzlich durch den Druckbalken und die Schneidleiste zusammengepreßt. Daraufhin wird das Schneidmesser 28 zugestellt, d.h. das Furnierpaket entlang der ersten Längs- Schnittlinie abgeschnitten. Sofern die einzelnen Furnierblätter dieses Furnierpakets nachfolgend aneinandergeleimt werden sollen, um ein Furnierdeck herzustellen, wird entlang dieser Längskante des Pakets Leim aufgegeben.

Jetzt wird der Druckbalken angehoben und gleichzeitig auch die Schneidleiste wieder abgesenkt. Hernach erfolgt das Verschieben des abgeschnittenen Furnierpakets von den Umlenkrollen 13 und 15 zu den Umlenkrollen 12 und 14 hin, indem man die Transportbänder nunmehr in Gegenrichtung laufen läßt. Gleichzeitig erfolgt das Wenden der Zustell-Wende-Haltevorrichtung 9, beispielsweise im Sinne des Pfeils 27. Dieses Wenden ist kurz vor dem Zustellen des Pakets entgegen den Pfeilen 20 und 21 beendet, so daß das Paket lediglich noch um einen minimalen Betrag zur Schneidebene 26 hin vorgeschoben werden muß.

Nachfolgend wird die Schneidleiste wieder angehoben, gleichzeitig oder geringfügig zeitlich versetzt der Druckbalken abgesenkt und es erfolgt daraufhin das Abschneiden entlang der zweiten Längs-Schnittlinie. Als nächstes wird die Schneidleiste 29 wieder abgesenkt und zur gleichen Zeit kann man auch die beiden Bänder entspannen, was man beispielsweise durch Anheben des n u n m e h r oberen Bandes (11) erreicht. Das Paket bleibt jedoch zusammengepreßt, weil der obere Druckbalken noch abgesenkt ist.

Während die geschilderten Arbeitsgänge ablaufen, kann das zweite Furnierpaket auf den Schlitten oder Wagen 1 der Übergabevorrichtung 2 aufgelegt, ausgerichtet und gegen den Richtanschlag hin verschoben werden.

Falls ein Beleimen des ersten Furnierpakets vorgesehen ist, erfolgt nunmehr der Beleimvorgang entlang der zweiten Längs-Schnittebene. Hernach wird der Druckbalken wieder angehoben und daraufhin das erste Paket in nachfolgend noch zu beschreibender Weise weitertransportiert.

Während des Beleimens und des Abtransports des ersten Furnierpakets erfolgt bereits das Festlegen der Schnittlinien des zweiten Furnierpakets. Bis zum Austransport des ersten Furnierpakets ist eine Zeitspanne in der Größenordnung von ca. 25 Sekunden vergangen.

Wenn das Furnierpaket beleimt worden ist, so gelangt es nachfolgend unmittelbar zu einer Furnier-Zusammensetzmaschine, die von bekannter Bauart sein kann. Aufgrund der hohen Arbeitsgeschwindigkeit dieser Schneidmaschine ist es vorteilhaft, wenn man ihr zwei Furnier-Zusammensetzmaschinen einander gegenüberliegend zuordnet. Der Arbeitszyklus der Furnier-Zusammensetzmaschinen ist bedingt durch die Abbindezeit des Leims zwangsläufig größer als die Zeitspanne eines Arbeitszyklus der Schneidmaschine. Die aus letzterer austretenden Furnierpakete kann man beispielsweise abwechselnd nach links und rechts abtransportieren, um sie so den Furnier-Zusammensetzmaschinen zuzuführen.

Wenn die Schneidmaschine lediglich zum sogenannten Besäumen der Furnierpakete verwendet wird, so müssen die fertig geschnittenen Pakete beispielsweise zum Versand gebracht werden. Dies erfolgt jedoch nicht einzeln, vielmehr stapelt man mehrere Furnierpakete, zum Beispiel auf Paletten 32 einer Abstapelvorrichtung 33. Es bleibt noch nachzutragen, daß in Fig. 1 auch die Leimvorrichtung 34 schematisch dargestellt ist.

Zwischen der Abstapelvorrichtung 33 und der Schneidmaschine 8 befindet sich eine zusätzliche Fördervorrichtung 35. Auch sie besitzt ein Endlos-Transportband 36. Es kann, wie Fig. 2 zeigt, gleichfalls aus mehreren, im zeitlichen Abstand nebeneinander angeordneten Teilbändern bestehen. Das Übernahmeende 37 der zusätzlichen Fördervorrichtung 35 hat während des Schneidens einen Abstand von der Schneidebene 26. Dieser gegenseitige Abstand ist notwendig, damit die abgeschnittenen Ränder, beispielsweise über eine Rutsche 38 bequem abgeführt werden können.

Nach dem Abschneiden entlang der zweiten Längs-Schnittlinie und dem darauffolgenden Anheben des Druckbalkens 31 wird das Übernahmeende 37 im Sinne des Pfeils 39 vorgeschoben. Dadurch verkürzt sich die Schlaufe 40 des Endlos-Transportbands 36, wobei sich die Umlenkrolle 51 von ihrer unteren in Richtung auf ihre obere mit 51a bezeichnete Stellung bewegt. Während des Festlegens der Längs-Schnittlinien des zweiten Furnierpakets wird das erste Furnierpaket mit Hilfe des nunmehr unten befindlichen Transportbands an das vorgeschobene Übernahmeende 37 des Endlos-Transportband 36 der zusätzlichen Fördervorrichtung 35 übergeben. Daraufhin wird dieses Übernameende 37 wieder in die Ausgangsstellung zurückgefahren und gegebenenfalls gleichzeitig angetrieben, um das erste, an seinen beiden Längskanten beschnittene Furnierpaket 3 gegen einen absenkbaren Anschlag 41 einer zusätzlichen Schneidvorrichtung 42 zu transportieren. Auf letzterer werden die zuvor festgelegten Enden der Furnierpakete längs der Quer-Schnittlinien abgeschnitten, wobei der Schneidvorgang in zumindest ähnlicher Weise abläuft wie bei der Schneidmaschine 8. Ein Unterschied besteht allerdings darin, daß eine, oder vorzugsweise je eine jedem Paketende zugeordnete Schneideinrichtung insbesondere aufgrund einer entsprechenden Steuerung durch den erwähnten Rechner gegenüber ihrer zugeordneten Quer-Schnittlinie ausgerichtet wird. Man erreicht dies beispielsweise mittels einer symbolisch eingezeichneten Querzustellvorrichtung 43, die zum Beispiel aus einer Gewindespindel mit entsprechender Mutter od. dgl. bestehen kann. Demnach besitzt auch diese zusätzliche Schneidvorrichtung mindestens einen Druckbalken, eine absenkbare Schneidleiste oder ein entsprechendes Gegenmesser und ein zustellbares Schneidmesser, wobei diese Elemente zweckmäßigerweise in doppelter Ausführung vorhanden sind, um möglichst gleichzeitig an beiden Enden in Querrichtung abschneiden zu können.

Während die Schnittlinien des zweiten Furnierpakets festgelegt werden, kann man nach dem Ausbringen des ersten Furnierpakets die endlosen Transportbänder 10 und 11 noch auf "Null" stellen, um eine Addition von Fehlern zu vermeiden.

Wenn das erste Furnierpaket auch an seinen Enden in Querrichtung abgeschnitten ist, wird es mit Hilfe des Endlos-Transportbands 36 an ein weiteres Transportband 44 der Abstapelvorrichtung 33 übergeben, das, wie die strichpunktierten Linien ausweisen, in gleicher Weise ausfahr- und rückstellbar ist, wie das Übernahmeende 37 des Endlos-Transportbands 36. Dieses Ausfahren ist durch den Pfeil 45 symbolisiert.

Das erste, fertig beschnittene Furnierpaket wird am in Fig. 1 rechten Rand der Palette 32 abgestapelt. Da die Breite des Pakets zuvor vom Rechner erfaßt wurde, kann man nun durch den Rechner gesteuert das Abgabeende 46 nach dem Absetzen des ersten Furnierpakets um die Breite dieses Pakets gegebenenfalls zuzüglich eines vorgesehenen Abstands zwischen zwei Paketen entgegen dem Pfeil 45 zurückziehen. Auf diese Weise lassen sich die einzelnen, möglicherweise unterschiedlich breiten Furnierpakete mit konstantem Seitenabstand vollautomatisch abstapeln. Wenn die erste Lage abgesetzt ist, wird die Palette 32 abgesenkt, und man kann dann die nächsten Pakete, beispielsweise genau auf Lücke über den darunter befindlichen Furnierpaketen abstapeln, wobei man die Werte wieder vom Rechner beziehen kann. Hierbei ist es dann von Vorteil, daß

den Rechner auch die Höhe der einzelnen Furnierpakete übermittelt wurde, so daß er auch das Absenken der Palette 32 um den richtigen Betrag, also beispielsweise die Höhe des höchsten Furnierpakets, steuern kann.

Aus Fig. 2 ersieht man, daß nicht nur das Endlos-Transportband 36, sondern auch das weitere Transportband 44 jeweils aus Teilbändern besteht und dementsprechend auch ihre Umlenkrollen gegebenenfalls aus Teilrollen aufgebaut sein können. Auch der absenkbare Anschlag 41 ist mehrteilig.

Die Querschneideinrichtung 47 oder -einrichtungen der zusätzlichen Schneidvorrichtung 42 sind in Fig. 2 der Übersichtlichkeit wegen nicht eingezeichnet.

Man erkennt jedoch aus Fig. 2, daß in der Schneidebene 26 eine geometrische, sich senkrecht zur Bildebene der Fig. 2 erstreckende Drehachse 48 vorgesehen ist, welche die Längsmittelachse 49 der Maschine kreuzt. Um diese geometrische Achse 48 kann die Übergabevorrichtung 2 zusammen mit der Zustell-Wende-Haltevorrichtung 9 um einen Winkel 50 verschwenkt werden, der in Fig. 2 beispielsweise eingezeichnet ist. Vorzugsweise bildet die Längsmittelachse 49 eine Winkelhalbierende dieses Winkels 50.

Diese Verschwenkmöglichkeit bedeutet, daß man die zweite Längs-Schnittlinie gegenüber der ersten antiparallel festlegen kann, so daß ein trapezförmiges Furnierpaket entsteht. Selbstverständlich wird auch der Richtanschlag 4 mit verschwenkt, jedoch bleibt das Richtlicht 7 ortsfest, d.h. die Richtlichtebene verläuft nach wie vor parallel zur Schneidebene 28. Aufgrund dieser Verschwenkbarkeit erreicht man eine optimale Ausnutzung des Furnierpakets.

Zumindest in Querrichtung kann das Abtrennen auch durch Absägen statt Abschneiden vorgenommen werden. Denkbar ist auch das Abtrennen mittels energiereichen Strahlen, z.B. Wasserstrahl oder Laserstrahl. Im Falle anderer Abtrennmethoden als mit dem Schneidmesser, tritt an die Stelle von Messer und Schneidleiste eine entsprechende Trennvorrichtung, z.B. ein Laserschneidgerät.

In vorteilhafter Weise wird die auf die Auflagefläche projizierte Fläche des Furnierpakets erfaßt, die in der Regel der Bruttofläche eines Furnierblatts entspricht. Dies kann beispielsweise mit derselben Einrichtung geschehen, welche die Schnittlinien festlegt bzw. markiert. Auf diese Weise läßt sich in Verbindung mit den festgelegten oder markierten Werten für die Schnittlinien die Furnierausbeute ermitteln oder vorgeben und zu weiteren Zwecken, beispielsweise der Rechnungstellung etc., ausnutzen.

15 275

A n s p r ü c h e

1.  Maschine zum Beschneiden der Längskanten eines Furnierpakets, der eine Vorrichtung zum Festlegen bzw. Anbringen wenigstens einer Längs-Schnitt- oder -Markierungs- oder dazu parallelen -Referenzlinie zugeordnet ist, gekennzeichnet durch eine Wendevorrichtung (9) mit einer zur Paketoberfläche parallelen Drehachse (23), die zugleich als Haltevorrichtung für das Furnierpaket (3) ausgebildet ist, wobei sich die Festleg- bzw. Markierungsvorrichtung (2, 7) vor der Wendevorrichtung oder an deren
Eintrittsbereich befindet.

2.  Maschine nach Anspruch 1, dadurch gekennzeichnet, daß eine
Zustellvorrichtung (9) zum Transport des Furnierpakets (3) in den
Schneidbereich (26) von der Festleg- bzw. Markierungsvorrichtung
(2, 7) oder durch die mittels letzterer festgestellten Werte
steuerbar ist.

3.  Maschine nach Anspruch 2, dadurch gekennzeichnet, daß die
Wende- und Haltevorrichtung (9) zugleich als Zustellvorrichtung
(9) für das Paket (3) ausgebildet ist.

- 2 -

4.   Maschine nach Anspruch 3, dadurch gekennzeichnet, daß der Zustell-Wende-Haltevorrichtung (9) eine mit einem Richtanschlag (4) od. dgl. zusammenwirkende oder diesen aufweisende Übergabevorrichtung (2) vorgeschaltet ist.

5.   Maschine nach Anspruch 4, dadurch gekennzeichnet, daß die Übergabevorrichtung (2) zugleich einen Teil der Festleg- bzw. Markierungsvorrichtung (2, 7) bildet und letztere mit einem Richtlicht (7) bzw. einer Markierungseinheit ausgestattet ist.

6.   Maschine nach Anspruch 5 mit einer gegenüber der Schneidebene (26) ortsfesten Richtlicht (7), dadurch gekennzeichnet, daß der Richtanschlag (4) in fester Zuordnung zum Richtlicht (7) montiert und absenkbar ausgebildet ist, und daß die Übergabevorrichtung (2) zwischen zwei Endstellungen hin und her verschiebbar ist.

7.   Maschine nach Anspruch 6, dadurch gekennzeichnet, daß der Richtanschlag (4) um den Betrag des sogenannten minimalen Fügeverlusts gegenüber der Ebene des Richtlichts (7) zur Zustell-Wende-Haltevorrichtung (9) hin versetzt ist.

8.   Maschine nach wenigstens einem der Ansprüche 3 bis 7, dadurch gekennzeichnet, daß die Zustell-Wende-Haltevorrichtung (9) aus zwei in gegenläufigem Sinne umlaufenden, endlosen, über je eine vordere und hintere Umlenkwalze (12, 13; 14, 15) od. dgl. geführten Transportbändern (10, 11) od. dgl. mit zueinander parallelen Trumen mit Vor- und Rückwärtslauf besteht.

9. Maschine nach Anspruch 8, dadurch gekennzeichnet, daß zur Vergrößerung des das Paket (3) aufnehmenden Spaltraums (16) zwischen den Transportbändern (10, 11) od. dgl. beide Transportbänder, insbesondere parallel zu sich, selbst abstellbar sind.

10. Maschine nach Anspruch 8 oder 9, dadurch gekennzeichnet, daß die Drehachse (23) der Zustell-Wende-Haltevorrichtung (9) etwa in der Ebene des oberen Trums (19) des unteren Transportbands (11) od. dgl. gelegen ist und beide Transportbänder (10, 11) quer zur Ebene ihrer am Paket (3) anliegenden Trume synchron etwa um einen der maximal zulässigen Paketdicke entsprechenden Betrag verstellbar sind.

11. Maschine nach wenigstens einem der Ansprüche 8 bis 10, dadurch gekennzeichnet, daß die Auflagefläche des unteren Transportbandes (11) od. dgl. in der Transport- und Wende-Ausgangsstellung etwa auf gleichem Niveau verläuft wie die Stützfläche (22) der Übergabevorrichtung (2).

12. Maschine nach wenigstens einem der Ansprüche 6 bis 11, dadurch gekennzeichnet, daß sich die Schneidebene (26) im selben Abstand von der geometrischen Drehachse (23) der Zustell-Wende-Haltevorrichtung (9) befindet, wie die Richtlichtebene (7) von dieser Achse (23).

13. Maschine nach wenigstens einem der Ansprüche 4 bis 12, dadurch gekennzeichnet, daß die Zustell-Wende-Haltevorrichtung (9) zusammen mit der Übergabevorrichtung (2), ausgehend von einer mittleren Normalstellung, um eine zur geometrischen Achse (23) der Zustell-Wende-Haltevorrichtung (9) sowie zur Furnierblattebene senkrechte Achse (48) nach beiden Drehrichtungen begrenzt dreh- und vorzugsweise feststellbar ist.

14. Maschine nach wengistens einem der vorhergehenden Ansprüche, dadurch gekennzeichnet, daß sich in Zustellrichtung (20) hinter der Zustell-Wende-Haltevorrichtung (9), aber vor dem Schneidmesser (28), ein anhebbarer Druckbalken (31) und etwa gegenüberliegend von diesem eine absenkbare Schneidleiste (29) oder ein absenkbares Untermesser befindet.

15. Maschine nach Anspruch 14, dadurch gekennzeichnet, daß sich in Zustellrichtung (20) hinter der Schneidebene (26) eine gegenüber der Zustell-Wende-Haltevorrichtung (9) ausrichtbare und in Arbeitsstellung bringbare zusätzliche Fördervorrichtung (35) befindet.

16. Maschine nach Anspruch 15, dadurch gekennzeichnet, daß die zusätzliche Fördervorrichtung (35) den Raum zwischen der Schneidmaschine (9) für die Längskanten des Pakets (3) und einer zusätzlichen Schneidvorrichtung (42) für wenigstens eine Querkante (3) überbrückt.

17. Maschine nach Anspruch 16, dadurch gekennzeichnet, daß die zusätzliche Schneidvorrichtung (42) als Doppelschneidvorrichtung für beide Querkanten und insbesondere auch als Vorrichtung zum Anbringen wenigstens einer Banderole ausgebildet ist.

18. Maschine nach wenigstens einem der vorhergehenden Ansprüche, dadurch gekennzeichnet, daß die Festleg- bzw. Markierungsvorrichtung (2, 7) zum Festlegen bzw. Markieren zweier Längs- und zweier Quer-Linien ausgebildet ist.

19. Maschine nach wenigstens einem der Ansprüche 12 bis 18, dadurch gekennzeichnet, daß die zusätzliche Schneidvorrichtung (42) einen absenkbaren Richtanschlag (41) für die in Zustellrichtung (20) vordere beschnittene Längskante des Pakets (3) aufweist.

20. Maschine nach wenigstens einem der Ansprüche 17 bis 19, dadurch gekennzeichnet, daß die zusätzliche Schneidvorrichtung (42) beidseits je eine in Längsrichtung des Pakets (3) zustellbare Schneideinheit (47) aufweist, die wenigstens je einen zustellbaren Druckbalken oder Niederhalter, eine zustellbare Schneidleiste oder ein zustellbares Untermesser sowie ein zustellbares Schneidmesser umfaßt.

21. Maschine nach wenigstens einem der Ansprüche 16 bis 20, dadurch gekennzeichnet, daß sich in Zustellrichtung (20) an die zusätzliche Schneidvorrichtung (42) eine Abstapelvorrichtung (33) anschließt, deren Aufnahme dem Abgabeende (46) der zusätzlichen Fördervorrichtung (33) zugeordnet ist, wobei die Stellung des Abgabeendes (46) gegenüber der Aufnahme veränderbar ist.

22. Maschine nach wenigstens einem der Ansprüche 4 bis 21, dadurch gekennzeichnet, daß die Übergabevorrichtung (2) mit einem mit der Festlegvorrichtung (2, 7) zusammenwirkenden Weggeber od. dgl. versehen oder durch diesen steuerbar ist, wobei die Wegstrecke zwischen den beiden Lagen des Pakets (3) beim Festlegen der beiden Längs-Schnittlinien eine Steuerungsgröße für den Vorschubweg des Pakets bildet.

23. Maschine nach Anspruch 22, dadurch gekennzeichnet, daß der Weggeber beim Festlegen der ersten Längs-Schnittlinie den Nullpunkt der Verschiebebewegung der Zustellvorrichtung (2, 7) markiert bzw. auf den Wegwert Null stellbar ist.

24. Maschine nach wenigstens einer der Ansprüche 16 bis 23, dadurch gekennzeichnet, daß die beiden Meßeinheiten od. dgl. für die Festlegung der Querlinien mit je einem oder mit einer gemeinsamen Weggeber od. dgl. zur Ermittlung des Querlinienabstands versehen sind.

25. Maschine nach Anspruch 24, dadurch gekennzeichnet, daß die Weggeber od. dgl. für die beiden Längs- und die beiden Querlinien mit einem Rechner zur Ermittlung der Fläche jedes beschnittenen Furnierblatts des Furnierpakets (3) verbunden sind.

26. Maschine nach Anspruch 25, dadurch gekennzeichnet, daß der Rechner zur Ermittlung der Furnierblattgröße mit einem Drucker zum Bedrucken von Banderolen, Begleitpapieren und dgl. verbunden ist.

27. Maschine nach wenigstens einer der vorhergehenden Ansprüche, gekennzeichnet durch eine Vorrichtung zur Ermittlung der Höhe des beim Abschneiden gepreßten Pakets (3).

28. Maschine nach Anspruch 27, dadurch gekennzeichnet, daß die Vorrichtung zur Ermittlung der Pakethöhe zur Bestimmung der gesamten Furnierfläche mit dem Rechner verbunden ist.

29. Verfahren zum Beschneiden eines Furnierpakets (3) an zumindest seinen beiden Längskanten, durchgeführt mit der Maschine nach wenigstens einer der vorhergehenden Ansprüche, wobei das Paket zwischen den beiden Schneidvorgängen um 180° gewendet wird und die beiden Längs-Schnittlinien vor dem Einbringen in den Schneidbereich der Schneidmaschine (8) festgelegt werden, wobei außerdem beim Festlegen jeweils ihr Abstand von der Schneidebene (26) erfaßt und das Paket zuerst um den Betrag des Abstands der ersten Schnittlinie von der Schneidebene in die Schneidmaschine transportiert wird, dadurch gekennzeichnet, daß das Paket (3) in festgehaltenem Zustand mittels einer Wendevorrichtung (9) gewendet und anschließend um den dann vorhandenen Betrag des Abstands der zweiten Schnittlinie von der Schneidebene (26) verschoben wird.

30. Verfahren zum Beschneiden eines Furnierpakets (3) an zumindest seinen beiden Längskanten, durchgeführt mit der Maschine nach wenigstens einer der Ansprüche 1 bis 28, wobei das Paket zwischen den beiden Schneidvorgängen um 180° gewendet wird, dadurch gekennzeichnet, daß die beiden Längs-Schnittlinien oder dazu um einen vorgegebenen Abstand parallel versetzte Referenzlinien vor dem Einbringen in den Schneidbereich der Schneidmaschine (8) auf dem Paket (3) markiert werden und das Paket zuerst so weit in die Schneidmaschine eingebracht wird, bis die erste Schnitt- oder Referenzlinie in der Sichtebene einer Detektorvorrichtung angekommen ist, wobei das Paket (3) bei gleichzeitigem Festhalten mittels einer Wendevorrichtung (9) gewendet und anschließend um den dann vorhandenen Betrag des Abstands der zweiten Schnitt- oder Referenzlinie von der Sichtebene der Detektorvorrichtung vorgeschoben wird.

31. Verfahren nach Anspruch 29, dadurch gekennzeichnet, daß beide Längs-Schnittlinien vor dem Einbringen des Pakets (3) in eine durch die Festlegvorrichtung (2, 7) oder durch Eingabe, insbesondere der festgelegten Werte, steuerbare Zustell-Wende-Haltevorrichtung (9) festgelegt werden.

32. Verfahren nach Anspruch 29 oder 31, dadurch gekennzeichnet, daß beide Quer-Schnittlinien vor dem Einbringen des Pakets (3) in eine durch die Festlegvorrichtung (2, 7) oder durch Eingabe, insbesondere der festgelegten Werte, steuerbare Zustell-Wende-Haltevorrichtung festgelegt werden.

33. Verfahren nach Anspruch 29, dadurch gekennzeichnet, daß das Paket (3) nach dem Festlegen der ersten Längs-Schnittlinie mittels einer durch die Festlegvorrichtung (2, 7) oder durch Eingabe der festgelegten Werte steuerbare Zustell-Wende-Faltevorrichtung (9) gegen die Schneidebene (26) hin verschoben wird und diese Zustellbewegung zur Festlegung der zweiten Längs-Schnittlinie unterbrochen wird.

34. Verfahren nach Anspruch 29, dadurch gekennzeichnet, daß das Paket (3) nach dem Festlegen der ersten Längs-Schnittlinie und der beiden Quer-Schnittlinien mittels einer durch die Festlegvorrichtung (2, 7) oder durch Eingabe der festgelegten Werte steuerbare Zustell-Wende-Faltevorrichtung (9) gegen die Schneidebene (26) hin verschoben wird und diese Zustellbewegung zur Festlegung der zweiten Längs-Schnittlinie unterbrochen wird.

35. Verfahren nach wenigstens einem der Ansprüche 29 und 31 bis 34, dadurch gekennzeichnet, daß die Längs-Schnittlinien mittels eines stationären Richtlichts (7) oder einer anderen, vorzugsweise optischen Festlegvorrichtung festgelegt werden, das sich am Einlaß der Zustell-Wende-Haltevorrichtung (9) oder in einem vorgegebenen Abstand davor befindet.

36. Verfahren nach wenigstens einem der Ansprüche 29 bis 35, dadurch gekennzeichnet, daß das Furnierpaket (3) zur Festlegung bzw. Markierung antiparalleler Schnittlinien um eine zur Stapeloberfläche senkrechte Achse (48) drehbar ist.

37. Verfahren nach wenigstens einem der Ansprüche 29 bis 36, dadurch gekennzeichnet, daß mindestens eine der Längs-Schnitt- oder Referenzlinien eines zweiten Pakets festgegelgt bzw. markiert wird, während ein erstes Paket (3) an seiner zweiten Längs-Schnittlinie beschnitten wird.

38. Verfahren nach Anspruch 37, dadurch gekennzeichnet, daß das zweite Paket nach dem Entspannen der Zustell-Wende-Haltevorrichtung (9) vor dem Ausbringen des ersten Pakets (3) eingebracht wird.

39. Verfahren nach wenigstens einem der Ansprüche 29 bis 38, dadurch gekennzeichnet, daß am Paket (3) vor dem Freigeben der Haltevorrichtung (9) oder etwa zusammen mit einem Querabtrennvorgang wenigstens eine Banderole od. dgl. in Klammervorrichtung angebracht wird.

40. Verfahren nach Anspruch 39, dadurch gekennzeichnet, daß das an Längskanten beschnittene Paket (3) an eine Querschneidevorrichtung (42) übergeben und an einem Richtanschlag (41) der letzteren ausgerichtet wird.

41. Verfahren nach Anspruch 40, dadurch gekennzeichnet, daß die beiden Querschneideinheiten (47) durch die Festlegvorrichtung (2, 7) oder durch die durch letztere festgelegten Werte einstellbar sind.

42. Verfahren nach Anspruch 41, dadurch gekennzeichnet, daß die festgelegten Werte für die Längs- und Quer-Schnittlinien in einen Rechner für die Ermittlung der Fläche eines Furnierblatts von der Festleg- bzw. Markierungsvorrichtung (2, 7) übermittelt oder eingegeben werden.

43. Verfahren nach Anspruch 42, dadurch gekennzeichnet, daß der gegenseitige Abstand der beiden Transportbänder od. dgl. in ihrer Festhaltestellung ermittelt wird und der ermittelte Wert, insbesondere zusammen mit der Furnierblattstärke in den Rechner eingegeben wird, wobei der Drucker die Fläche eines Furnierblatts und/oder der gesamten Furnierfläche des Stapels (3) insbesondere auf eine Banderole des vorzugsweise festgehaltenen Pakets druckt.

44. Verfahren nach wenigstens einem der Ansprüche 29 bis 43, dadurch gekennzeichnet, daß die Wegwerte der beiden Längs-Schnittlinien bzw. der tatsächlichen Paketbreite an eine Abstapelvorrichtung (33) übermittelt werden, wobei das Abgabeende (46) eines Transportbands (44) der Abstapelvorrichtung (33) vor dem Absetzen des Pakets (3) auf eine Palette (32) od. dgl. jeweils mindestens um die Paketbreite, vorzugsweise aber um die Paketbreite, zuzüglich eines jeweils konstanten Abstandsbetrags zwischen zwei benachbarten Paketen verschoben wird.

45. Verfahren nach Anspruch 44, dadurch gekennzeichnet, daß die Abstapelvorrichtung (33) oder eine Paletten-Stützeinrichtung heb-und senkbar ist und die Werte der Pakethöhen einer abgestapelten Lage zur Steuerung der Höhenlage einer Hebevorrichtung der Abstapelvorrichtung (33) bzw. der Paletten-Stützeinrichtung verwendet werden.

46. Verfahren nach wenigstens einem der Ansprüche 29 bis 45, dadurch gekennzeichnet, daß die auf die Auflagefläche projizierte Fläche des Furnierpakets erfaßt und insbesondere dem Rechner zugeführt wird.

Fig. 1

1/2

0151658

0151658

Fig. 2

**EUROPÄISCHER RECHERCHENBERICHT**

Europäisches
Patentamt

EP 84 10 1309

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int Cl.4) |
|---|---|---|---|
| A | DE-B-1 084 901 (DANZER & WESSEL GmbH FURNIERWERK) <br> * Insgesamt * | 1,29 | B 27 L .5/08 <br> B 26 D 7/06 |
| A | DE-B-1 039 215 (FRANZ TORWEGGE, MASCHINENFABRIK) <br> * Insgesamt * | 1,29 | |
| A | DE-B-1 070 810 (FRANZ TORWEGGE MASCHINENFABRIK) <br> * Insgesamt * | 1,29 | |
| A | FR-A-2 171 814 (THE DERITEND ENGINEERING COMPANY LTD.) <br> * Insgesamt * | 1-3,29 | |
| A | FR-A-2 516 433 (H. MONTORNES) <br> * Insgesamt * | 1,29 | RECHERCHIERTE SACHGEBIETE (Int. Cl.4) <br><br> B 27 L <br> B 27 B <br> B 23 Q <br> B 27 D <br> B 65 H <br> B 26 D |

Der vorliegende Recherchenbericht wurde für alle Patentansprüche erstellt.

| Recherchenort <br> DEN HAAG | Abschlußdatum der Recherche <br> 05-11-1984 | Prüfer <br> MOET H.J.K. |
|---|---|---|